## Europäisches Patentamt
## European Patent Office
## Office européen des brevets

(11) Veröffentlichungsnummer : **0 171 567**
**B1**

(12) **EUROPÄISCHE PATENTSCHRIFT**

(45) Veröffentlichungstag der Patentschrift :
09.11.88

(21) Anmeldenummer : 85108099.4

(22) Anmeldetag : 29.06.85

(51) Int. Cl.⁴ : **F 02 F 3/00**, F 02 F 7/00,
F 02 F 3/26

(54) Tauchkolben mit faserverstäkter Brennraummulde für Verbrennungsmotoren.

(30) Priorität : 16.08.84 DE 3430056

(43) Veröffentlichungstag der Anmeldung :
19.02.86 Patentblatt 86/08

(45) Bekanntmachung des Hinweises auf die Patenterteilung : 09.11.88 Patentblatt 88/45

(84) Benannte Vertragsstaaten :
FR GB IT

(56) Entgegenhaltungen :
EP-A- 0 143 330
DE-A- 3 119 113
FR-A- 2 231 855
GB-A- 2 106 433
GB-A- 2 134 021

(73) Patentinhaber : **MAHLE GMBH**
**Pragstrasse 26-46 Postfach 50 07 69**
**D-7000 Stuttgart 50 (DE)**

(72) Erfinder : **Köhnert, Hans-Jürgen**
**Christophstrasse 41**
**D-7057 Winnenden (DE)**

Jouve, 18, rue St-Denis, 75001 Paris, France.

**Beschreibung**

Die Erfindung betrifft einen Tauchkolben nach dem Oberbegriff des Patentanspruchs 1.

Es ist bekannt, daß Brennraummulden in Kolbenböden an ihrem Rand rißgefährdet sind. Es gibt daher bereits die verschiedensten Methoden, den Muldenrand gegen derartige Risse zu schützen. So kann im Bereich des Muldenrandes ein Ring aus einem unter Hitze weniger rissanfälligen Material als Aluminium eingelegt sein. Dieser Ring kann durch in das Aluminiumgrundmaterial des Kolbens hineinragende Ärmchen oder eine andere hinterschnittartige Formgebung verankert sein. Der Ring kann aber auch aus einem porösen Material sein und bei Herstellung des Kolbens im Flüssigpressverfahren mit dem Aluminiumgrundwerkstoff des Kolbens ausgefüllt und verbunden werden. Dabei sind auch schon Verstärkungen aus Fasermaterial verwendet worden (Zeitschrift : High Speed Diesel Report May/June 83, S. 40-41 und GB-A 21 34 021). Bei Verwendung von Verstärkungen und Fasermaterial, wobei dies Kurzfasern z. B. aus Aluminiumoxid oder Siliziumcarbid sein können, hat sich gezeigt, daß je nach Wahl der Dichte der Faser-Verstärkung die Rissneigung ganz erheblich vermindert werden kann. Allerdings konnte bisher kein Wert für eine Dichte der Faserverstärkung gefunden werden, bei dem die Entstehung von Muldenrandanrissen auch bei extremen Belastungen des Kolbens mit ausreichender Sicherheit vermieden werden kann.

Hier eine weitere Verbesserung zu finden, ist die Aufgabe der vorliegenden Erfindung.

Gelöst wird diese durch eine Ausbildung des Aufbaus des Verstärkungsbereiches am Muldenrand nach den kennzeichnenden Merkmalen des Patentanspruchs 1.

Bei einer solchen Ausführung hat sich in überraschender Weise gezeigt, daß Anrisse über den gesamten Umfang des Muldenrandes gleichermaßen sicher vermieden werden können. Vor allen Dingen konnte in Fällen, in denen unter extremen Testbedingungen noch Anrisse erzeugt werden konnten, kein Umfangsbereich festgestellt werden, in dem solche Risse bevorzugt auftreten. Durch die erfindungsgemäße Ausführung ist damit erreicht, daß die Verstärkung in ihrem Aufbau den in den unterschiedlichen Umfangsbereichen herrschenden Kräften jeweils optimal Widerstand leisten kann. Denn es ist bekannt, daß dieser Muldenrand im Bereich der Pleuelschwingebene in erster Linie hohe Temperaturwechselbeständigkeit und in Richtung der Bolzenachse dagegen in erster Linie hohe Dauerfestigkeit aufweisen muß. Durch die Erfindung konnte gefunden werden, daß zur Erreichung einer hohen Dauerfestigkeit ein relativ hoher Anteil an Fasermaterial in der Verstärkungszone erforderlich ist, der jedoch hinsichtlich der Temperaturwechselbeständigkeit kein Optimum darstellt. Für die Temperaturwechselbeständigkeit ergeben sich nämlich die besten Werte bei niedrigeren Faseranteilen in dem Verstärkungsbereich. Dieses Ergebnis ist recht überraschend, da bisher angenommen wurde, daß hohe Faseranteile in dem Verstärkungsbereich hinsichtlich der Vermeidung von Anrissen besonders gute Ergebnisse bewirken. Als Grenze für den einzubringenden Faseranteil wurde daher in der Regel ein solcher Anteil angesehen, bei dem gerade noch eine ausreichende vollständige Durchdringung mit Aluminiumgrundmaterial gewährleistet ist.

Obwohl in der nicht vorveröffentlichten EP 0 143 330 A bereits beschrieben ist, daß ein Kolben in unterschiedlichen Bereichen unterschiedlichen Anteil an verstärkenden Fasern aufweisen kann, enthält diese Schrift keinen Hinweis darauf, wie die unterschiedlichen Faseranteile über den Umfang des Muldenrandes des Kolbens verteilt sein sollen, um Anrisse sicher vermeiden zu können.

Zweckmäßige Ausgestaltungen der Erfindung enthalten die Unteransprüche.

Ausführungsbeispiele der Erfindung sind in der Zeichnung wiedergegeben. Es zeigen

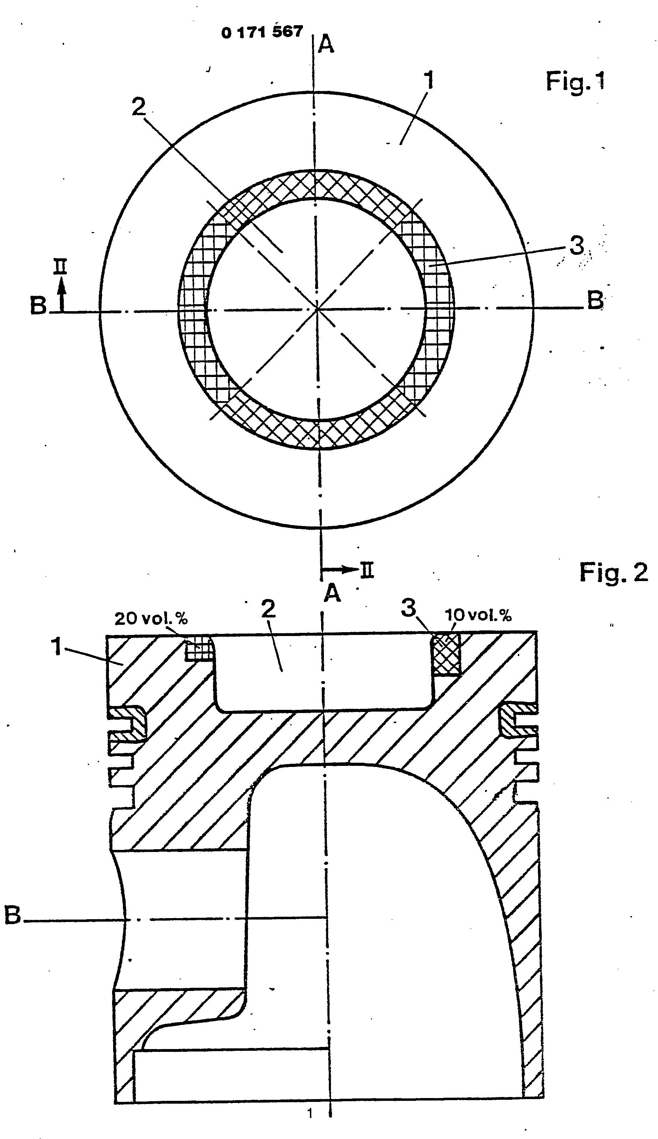

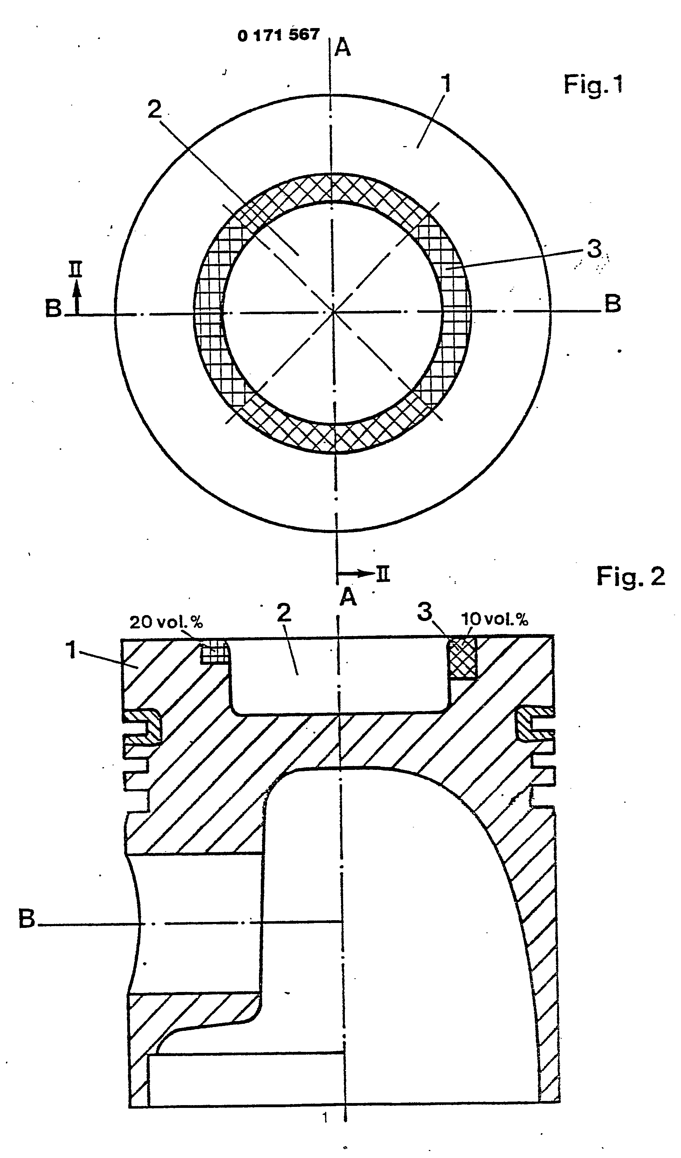

Fig. 1 eine Draufsicht auf einen mit einer Brennraummulde versehenen Kolben

Fig. 2 einen Schnitt durch den Kolben nach Linie II-II

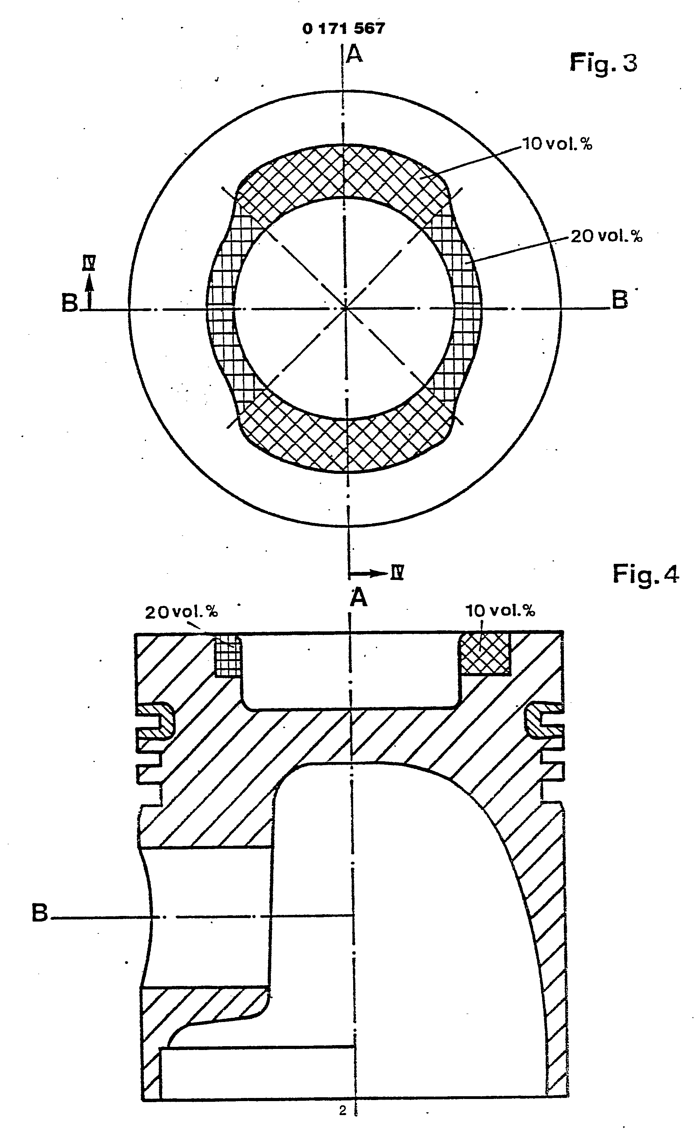

Fig. 3 eine Draufsicht auf einen Kolben mit einer abgewandelten Muldenrandbewehrung

Fig. 4 einen Schnitt durch einen Kolben nach Linie IV-IV

Fig. 5 eine Abwicklung der ringförmigen Faserverstärkung

Der Kolben 1 besteht aus einer AlSi- oder AlCu-Legierung und weist eine Brennraummulde 2 auf. Der Rand 3 der Brennraummulde 2 ist faserverstärkt. Diese Faserverstärkung wird folgendermaßen erzeugt.

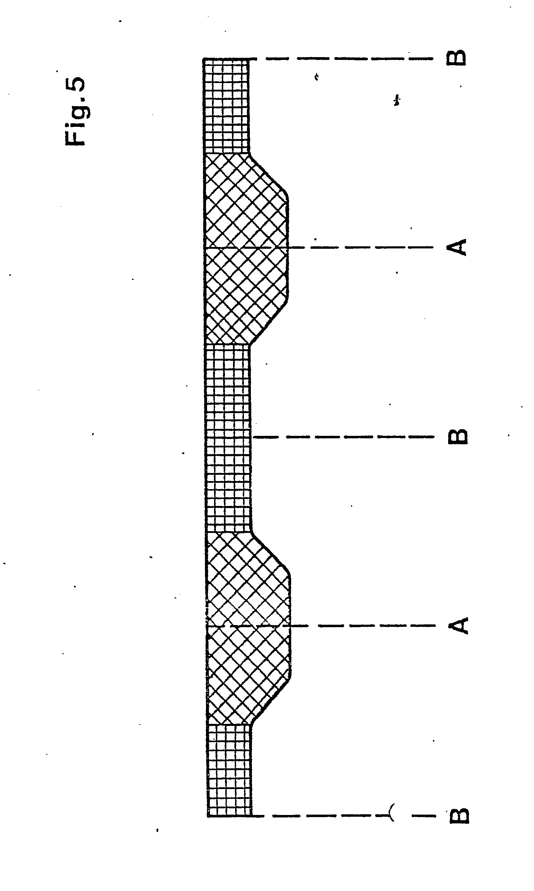

Es wird zunächst ein Ring aus Aluminiumoxyd oder Siliziumcarbid-Kurzfasern erzeugt. Die Faserdichte ist bei diesem Ring über dessen Umfang und Höhe gleich groß. Dieser Ring aus Fasermaterial soll mit Aluminiumgrundmaterial aufgefüllt am fertigen Kolben 1 den Muldenrand 3 bilden. Das Ausfüllen des Ringes aus Fasermaterial mit Aluminiumgrundwerkstoff folgt durch Einlegen des Ringes in eine Gießform und anschließendes Einbringen des Aluminiummaterials in die die Grundform des Kolbens aufweisende Gießform im Flüssigpressverfahren. Auf diese Weise wird der Ring aus Fasermaterial praktisch bei der Herstellung des Kolbens in den Muldenrand 3 eingeformt. Um an dem Muldenrand im Bereich der Bolzenachse B eine größere Faserdichte zu erhalten als in dem an die Pleuelschwingebene A angrenzenden Muldenrand 3 wird der zunächst gleiche Dichte aufweisende Ring aus Fasermaterial noch vor Einlegen in die Gießform, in den Bereichen, die eine höhere Faserdichte erhalten sollen, auf den gewünschte höheren Dichtewert verdichtet. Dabei kann die Verdichtung des Ringes in den betreffenden Bereichen entweder radial oder axial oder sogar in beiden Richtungen erfolgen. In der Fig. 5 ist die Abwicklung eines Ringes dargestellt, der in den höhere Faserdichte aufweisenden Bereichen jeweils axial auf einen geringeren Querschnitt verdichtet ist. Die Verteilung der Faserdichte über den Ring kann so gewählt werden, daß jeweils in einem Bereich von 45° um die Bolzenachse B der Faseranteil in dem fertig eingepressten Ring 20 % in bezug auf das Faser-Aluminium-Verbundmaterial beträgt, während der entsprechende Faseranteil in dem Faser-Aluminium-Verbundmaterial in dem Bereich von jeweils 45° um die Pleuel-Schwingebene bei nur 10° liegt, d. h. nur halb so groß ist. Der Ring aus Fasermaterial ist bei dem fertig gepressten Kolben in allen Bereichen in seinen ursprünglich vorhandenen Poren vollständig mit Aluminiummaterial ausgefüllt.

## Patentansprüche

1. Tauchkolben (1) aus Aluminium für Verbrennungsmotoren mit einer im Kolbenboden angeordneten Brennraummulde (2), in deren in den Kolbenboden übergehendem Randbereich (3) das Aluminiummaterial faserverstärkt ist, dadurch gekennzeichnet, daß in dem durch Fasern verstärkten Bereich der Anteil an Fasern je Volumeneinheit verstärkten Aluminiummaterials im Bereich der Bolzenrichtung B höher als im Bereich der Pleuelschwingebene A ist.

2. Tauchkolben nach Anspruch 1, dadurch gekennzeichnet, daß zur Faserverstärkung Kurzfasern aus Aluminiumoxyd (Al$_2$O$_3$) oder Siliziumcarbid (SiC) eingesetzt sind.

3. Tauchkolben nach Anspruch 1 oder 2, dadurch gekennzeichnet, daß der Anteil an Fasern im Bereich für Bolzenachse B je Volumeneinheit verstärkten Aluminiums etwa doppelt so hoch ist wie im Bereich der Pleuelschwingebene.

4. Tauchkolben nach einem der vorhergehenden Ansprüche, dadurch gekennzeichnet, daß der Faseranteil je Volumeneinheit verstärkten Aluminiummaterials im Bereich der Pleuelschwingebene bei etwa 5-15 % liegt.

5. Tauchkolben nach einem der vorhergehenden Ansprüche, dadurch gekennzeichnet, daß die Umfangsbereichen, in denen die Faseranteile unterschiedlich sind, sich sowohl um die Pleuelschwingebene A als auch um die Bolzenachse B jeweils beidseitig um mindestens 30° erstrecken.

6. Tauchkolben nach einem der vorhergehenden Ansprüche, dadurch gekennzeichnet, daß die Umfangsbereiche mit unterschiedlichen Faseranteilen gleich groß sind und jeweils symmetrisch zur Bolzenachse B und zur Pleuelschwingebene A liegen.

7. Verfahren zur Herstellung eines Kolbens nach einem der vorhergehenden Ansprüche, bei dem der faserverstärkte Bereich aus einem vorgepressten Ring aus Fasern besteht, in den das Aluminiummaterial während einer durch Flüssigpressen erfolgenden Herstellung des Kolbens eindringt, dadurch gekennzeichnet, daß zunächst aus Fasermaterial ein Ring mit einer rundum gleichen Faserdichte gepresst wird und daß dieser Ring anschließend vor dem Umgießen mit Aluminium in den Bereichen, die an die Bolzenachse B angrenzen sollen, zur Erzielung der dort erwünschten höheren Faserdichte auf eine geringere Höhe und/oder geringere radiale Breite nachverdichtet wird.

## Claims

1. Plunger piston (1) of aluminium and intended for internal combustion engines and comprising, disposed in the piston crown, a combustion chamber recess (2) in the marginal portion (3) of which, which merges into the piston crown, the aluminium material is fibre reinforced, characterised in that in the fibre reinforced area, the proportion of fibres per unit of volume of the reinforced aluminium material is in the region of the gudgeon pin direction B higher than in the region of the connecting rod oscillating plane A.

2. Plunger piston according to Claim 1, characterised in that for the fibre reinforcement, short fibres of aluminium oxide (Al$_2$O$_3$) or silicon carbide (SiC) are used.

3. Plunger piston according to Claim 1 or 2, characterised in that the proportion of fibres in the region for gudgeon pin axis B per unit of volume of reinforced aluminium is about twice as great as in the area of the connecting rod oscillating plane.

4. Plunger piston according to one of the preceding Claims, characterised in that the proportion of fibres per unit of volume of reinforced aluminium material is around 5-15 % in the region of the connecting rod oscillating plane.

5. Plunger piston according to one of the preceding Claims, characterised in that the peripheral zones in which the proportions of fibres vary extend both around the connecting rod oscillating plane A and also around the gudgeon pin axis B, in each case by at least 30 % on either side.

6. Plunger piston according to one of the preceding Claims, characterised in that the peripheral portions which have varying proportions of fibres are of the same size and are in each case symmetrical of the gudgeon pin axis B and connecting rod oscillating plane A.

7. Method of producing a piston according to one of the preceding Claims, in which the fibre reinforced area consists of a pre-moulded ring of fibres into which the aluminium material penetrates during production of the piston which takes place by a fluid moulding process, characterised in that firstly the fibre material is moulded under pressure to produce a ring having the same density of fibres all round, and in that prior to being cast in aluminium, the ring is then in those zones which are intended to border on the gudgeon pin axis B, subjected to secondary compression to a reduced height and/or reduced radial width in order to achieve the greater density of fibres required in those locations.

## Revendications

1. Piston (1) en aluminium, pour moteur à combustion interne, comportant dans sa tête une cuvette (2) de chambre de combustion dont le bord (3), raccordé à cette tête, de laquelle l'aluminium est renforcé par des fibres, piston caractérisé en ce que, dans la zone renforcée par des fibres, la proportion de fibres par unité de volume d'aluminium renforcé est plus élevée près de l'axe (B) du tourillon qu'au voisinage du plan (A) de pivotement de la bielle.

2. Piston selon la revendication 1, caractérisé en ce que ce sont des fibres courtes en oxyde d'aluminium ($Al_2O_3$) ou en carbure de silicium (SiC) qui sont incorporées pour réaliser l'armature de renforcement par des fibres.

3. Piston selon la revendication 1 ou 2, caractérisé en ce que la proportion de fibres par unité de volume d'aluminium renforcé est sensiblement deux fois plus forte au voisinage de l'axe B du tourillon qu'au voisinage du plan de déplacement ou de pivotement de la bielle.

4. Piston selon l'une des revendications précédentes, caractérisé en ce que la proportion de fibres par unité de volume d'aluminium renforcé est comprise sensiblement entre 5 % et 15 % au voisinage du plan de déplacement de la bielle.

5. Piston selon l'une des revendications précédentes, caractérisé en ce que les zones périphériques, dans lesquelles les proportions de fibres sont différentes, s'étendent sur au moins 30° de part et d'autre du plan A de déplacement de la bielle et de l'axe B du tourillon.

6. Piston selon l'une des revendications précédentes, caractérisé en ce que les zones périphériques à concentrations en fibres différentes ont la même grandeur et sont symétriques respectivement par rapport à l'axe B du tourillon et au plan A de déplacement de la bielle.

7. Procédé de fabrication d'un piston selon l'une des revendications précédentes, dans lequel la zone renforcée par des fibres est constituée par une couronne en fibres précomprimée, dans laquelle l'aluminium pénètre pendant la fabrication du piston par moulage sous pression, procédé caractérisé en ce que l'on forme, tout d'abord en comprimant des fibres, une couronne dont la concentration en fibres est partout la même, puis, avant de la noyer dans l'aluminium pendant la coulée, on comprime à une hauteur plus faible et/ou à une largeur radiale plus faible les zones qui seront adjacentes à l'axe B du tourillon afin d'y obtenir la concentration plus forte désirée.

**0 171 567**

Fig. 1

Fig. 2

20 vol. %

10 vol. %

0 171 567

Fig. 1

Fig. 2

20 vol.%

10 vol.%

**Fig. 3**

A

10 vol. %

20 vol. %

B — B

IV

A

IV

**Fig. 4**

20 vol. %

10 vol. %

A

B

2

Fig.5